# EUROPEAN PATENT SPECIFICATION

(11) **EP 1 772 036 B1**
(45) Date of publication and mention of the grant of the patent: **06.03.2013**
(21) Application number: 04770728.6
(22) Date of filing: 29.07.2004
(51) Int. Cl.: H04L 29/06, H04W 12/02

(54) **PROVISION OF LOCATION INFORMATION INTO IRI**
BEREITSTELLUNG VON POSITIONSINFORMATIONEN FÜR IRI
FOURNITURE D'INFORMATIONS DE LOCALISATION EN INFORMATIONS RELATIVES A L'INTERCEPTION (IRI)

(43) Date of publication of application: 11.04.2007
(73) Proprietor: Telefonaktiebolaget LM Ericsson (publ), 164 83 Stockholm (SE)
(72) Inventor: IOVIENO, Maurizio, 84085 Mercato San Severino (SA) (IT); LALA, Alessandro, I-80125 Napoli (IT)
(74) Representative: Sjöberg, Mats Hakan
(86) International application number: PCT/IT2004/000418
(87) International publication number: WO 2006/011166

(56) References cited:
- WO-A-99/27716
- WO-A-03/085936
- WO-A-2004/010649
- WO-A-2004/080093
- "Digital cellular telecommunications system (Phase 2+); Lawful Interception; Stage 2 (3GPP TS 43.033 version 5.0.0 Release 5); ETSI TS 143 033" ETSI STANDARDS, EUROPEAN TELECOMMUNICATIONS STANDARDS INSTITUTE, SOPHIA-ANTIPO, FR, vol. 3-SA3, no. V500, June 2002 (2002-06), page COMPLETE65, XP014010468 ISSN: 0000-0001

## Description

### Technical Field

The present invention relates to methods and arrangements in a telecommunication system to provide geographical location information into interception related information related to a mobile subscriber/equipment who/which is target for lawful interception.

### Background Art

Three major trends currently occurs in telecommunication, i.e. 1) increasing amount of data traffic, 2) real-time communication goes from circuit switching to packet switching, and 3) new focus of real-time in packet switching, for example video and multimedia. The ever increasing amount of data traffic as well as real-time communication in packet switched networks has lead to a demand for monitoring of this data traffic with the same level of security and confidentiality as known from circuit switched networks monitoring.

One kind of monitoring is lawful interception, i.e. the act of intercepting a communication on behalf of a law enforcement agency. Interception of Intercept Related Information IRI is known. Intercept Related Information is defined as signaling information related to target subscribers, for example call establishment. Interception of Content of Communication CC i.e. speech and data is also known. As an example, in Circuit Switching domain, the sending of IRI to a monitoring function is triggered by the following call-related and non-call related events:
- Call Establishment
- Answer
- Supplementary Service
- Handover
- Release
- SMS
- Location Update
- Subscriber/equipment Controlled Input

Appropriate session related and session unrelated events trigger the sending of IRI to a monitoring function in case of Packet Switching communication.

Beyond the demand for monitoring of IRI and CC, having location estimate in geographical form (latitude/longitude) in IRI is desired. The existing standardized location-based services architecture can be found in the 3GPP specifications TS 23.271. According to the related Standard, a Gateway Mobile Positioning Center GMLC is the first node that an external location services LCS client requiring information, accesses in a mobile network. The GMLC requests routing information, handles positioning requests and forwards location estimates to the location services client. Mobile positioning enables an operator to provide location-based services to his customer. Position procedures that can be used to obtain the location estimate are:
- Mobile Terminating Location Request, which is requested by a specific request sent from a Location Services client external to the network via a Gateway Mobile Location Center
- Mobile Originating Location Request, which is requested by the User Equipment
- Network Induced Location Request, which is triggered in case the User Equipment is performing an emergency call. Network Induced Location Request NI-LR is defined in the standards 3GPP TS 23.271 V6.7, see chapter 9.1.5.

Location-based services are forecasted to soon be one of the most important sources of operator revenue. The position can be used to provide mobile subscribers with information and services that take advantage of the given geographical location. The location estimates can also be used for charging and billing.

In the international application WO 03/085936 a service node TLNC is disclosed that is incorporated within a number of existing network elements. The TLNC queries a mobile subscriber location database server to obtain location information.

According to current Lawful Interception and Location Services LCS standards, it is not possible to get location estimate to be sent in the Intercept Related Information by using existing positioning procedures. The mentioned Network Induced Location Request as defined in the standards is stated to be for emergency call only. The only way that the standard foresees for Law Enforcement Agency to get location information for a monitored subscriber/equipment is to use a Location Services client, which can trigger a location request. There will however be no timing correlation between the received location estimate and the sending of Interception Related Information for other events, i.e. it is not possible to fill Interception Related Information for other events with location estimate required by the external LCS client. Moreover, in case the location request from the location services client is handled at a time in which there is no already established connection with the mobile subscriber/equipment, a paging procedure has to be initiated for lawful interception purpose, which is against the service requirements for lawful interception.

### Summary of the Invention

The present invention relates to problems how to fill lawful Interception Related Information with location estimate i.e. to correlate Interception Related Information with location estimate.

The problems are solved by the invention by introducing an interaction between Lawful Interception and existing Network Induced Location Request and thereby upon registering an event that requires sending of Interception Related Information, initiating start of the Network Induced Location Request procedure that normally is used for emergency call only, according to independent claims 1 and 8.

More in detail, the problems are solved by methods and arrangements in a mobile telecommunication system to generate interception related information that includes geographical location of a monitored mobile subscriber/equipment. The system is configured to provide to an Intercept configuration unit, information collected from an Intercept Access Point. The system is also configured to proceed with a Network Induced Location Request procedure. The method comprises the following steps:
- Receiving to the Intercept Access Point from the Intercept configuration unit, a request to monitor the mobile subscriber/equipment
- Detecting in the Intercept Access Point of a specified Interception Related Information IRI activity involving the monitored subscriber/equipment
- The Intercept Access Point initiates start of the Network Induced Location Request procedure.

Advantages with the invention are:
- The invention provides operators and Lawful Interception Agencies a mechanism to provide/get accurate location information in the IRIs for each monitored subscriber/equipment. Interception Agencies would take advantage in having accurate location estimate of the monitored subscriber/equipment at the exact occurrence of events, such as call set-up without any delay or intrusive operations due to the use of an external Location Services client
- Possibility to provide Lawful Interception Agencies with accurate location information using resources already allocated in the network and without traffic disturbance of additional signaling
- Positioning information will be obtained without any intrusive mechanism or disturbance over the transaction established by the target
- Positioning information will be obtained without any ad-hoc generated Location Services traffic.

The invention will now be described more in detail with the aid of preferred embodiments in connection with the enclosed drawings.

### Brief Description of the Drawings

Figure 1 discloses a block schematic illustration of a telecommunication system that comprises an Intercept configuration unit.
Figure 2 discloses a block schematic illustration of the Intercept Access Unit.
Figure 3 discloses a flow chart illustrating some essential method steps of the invention.

### Ways of Carrying out the Invention

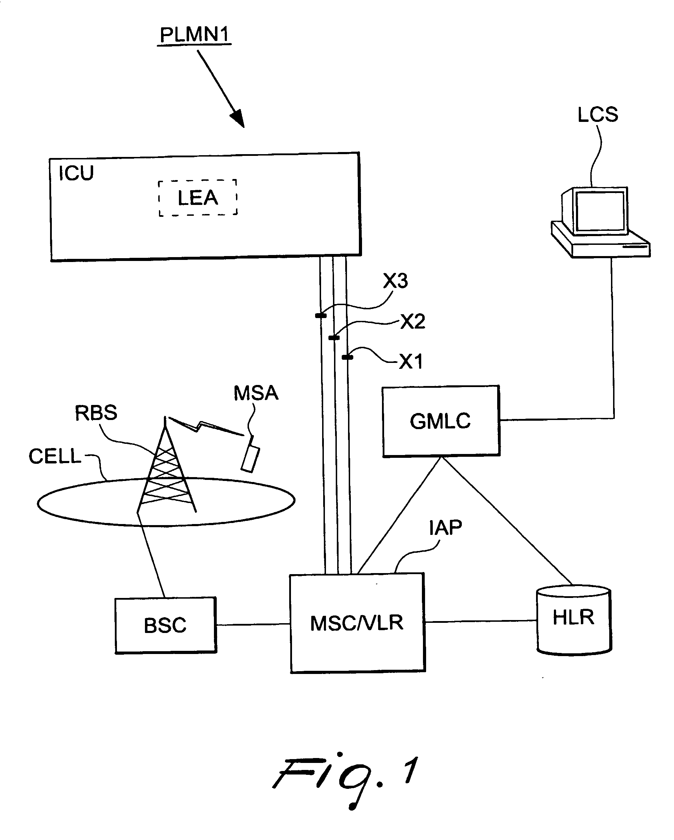

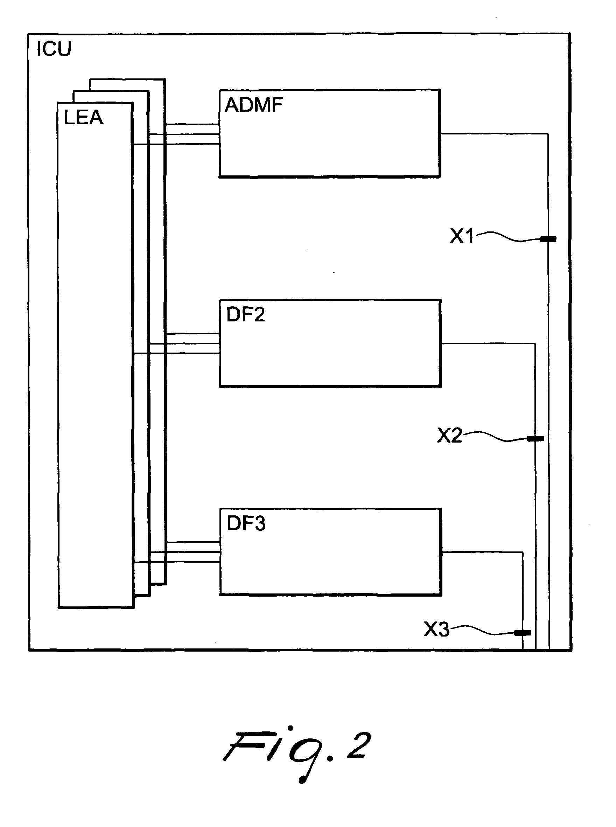

Figure 1 discloses a Public Land Mobile Network PLMN1. The Network in this example is a GSM network and comprises a Gateway Mobile Location Center GMLC connected to a Mobile Subscriber Center MSC/VLR. The MSC/VLR includes a Visitor Location Register in which mobile subscribers that are visiting the MSC control area are registered. The Mobile Subscriber Center MSC/VLR is connected to a Base Station Controller BSC that is connected to a Radio Base Station RBS. The RBS covers a radio cell CELL in which a mobile subscriber/equipment MSA is located. The Base Station Controller BSC controls a group of Radio Base Stations (only RBS is shown in the figure), and the Mobile Subscriber Center MSC/VLR controls a number of Base Station Controllers (only BSC is shown in the figure). The GMLC contains functionality required to support location services. The GMLC is the first node an external Location Services client accesses in the PLMN. In figure 1 a Location Services Client LCS is schematically shown as directly connected to the GMLC. A Home Location Register HLR is connected to both the MSC/VLR and to the GMLC. The GMLC may request routing information to the mobile subscriber/equipment from the Home Location Register HLR, i.e. information about in which MSC/VLR the mobile is registered. An Intercept Configuration Unit ICU is connected to the MSC/VLR in this example. The ICU is connected to the MSC/VLR which also is called an Intercept Access Point IAP, via three interfaces X1, X2 and X3. The ICU and the interfaces will be further explained in figure 2. In a Network Induced Location Request NI-LR procedure as defined in the standards and when applied to figure 1, the mobile subscriber/equipment MSA requests radio connection setup indicating a request (CM Service Request) for emergency Service call to the Mobile Subscriber Center MSC/VLR via the Radio Access Network in which the mobile is located. The emergency call procedure is applied whereby the MSC/VLR initiates procedures to obtain the mobile/subscriber's location, and location information is sent to an Emergency Center.

The Intercept Configuration Unit ICU is disclosed in figure 2. The ICU comprises at least one Law Enforcement Agency LEA (three blocks representing different LEAs are shown in figure 2). Each LEA is connected to three Mediation Functions respectively for ADMF, DF2, DF3 i.e. an Administration Function ADMF and two Delivery Functions, a so-called second Delivery Function DF2 and third Delivery Function DF3. The Administration Function and the Delivery Functions are each one connected to the Intercept Access Point IAP i.e. the MSC/VLR in the telecommunication network via the interfaces X1-X3. The ADMF is connected via the interface X1, DF2 is connected via X2 and DF3 is connected via X3. The Administration Function ADMF is together with the delivery functions used to hide from the network that there might be multiple activations by the different Law Enforcement Agencies. The messages sent from the ADMF to the network via the X1 interface comprise identities of the subscriber/equipment that is to be monitored, i.e. target identities. The second Delivery Function DF2 receives Intercept Related Information IRI from the network and DF2 is used to distribute the IRI to relevant Law Enforcement Agencies. The third Delivery Function DF3 receives Content of Communication CC, i.e. speech and data, and is used to distribute the CC to relevant LEAs. DF3 is responsible for call control signaling and bearer transport for an intercepted product. Intercept Related Information IRI, received by DF2, which IRI also are called Events, are either call related or non-call related. Intercept Related Information IRI is defined as signaling information related to target subscribers. Call establishment is an example of a call related event and Location Update is an example of a non-call related event.

Methods according to the invention will now be explained. The methods are used to add complementary location information in geographical terms (latitude, longitude) of the mobile subscriber/equipment, into Intercept Related Information IRI that has been generated after a request to monitor the mobile MSA from the Law Enforcement Agency.

A method according to a first embodiment of the invention will now be explained more in detail. The explanation is to be read together with figure 1 and 2. The method comprises the following steps:
- The Law Enforcement Agency LEA sends a request to the Administration Function ADMF to activate interception of the mobile subscriber/equipment MSA, i.e. to monitor MSA
- The ADMF forwards a target identity of the mobile subscriber/equipment MSA, to the Intercept Access Point IAP, i.e. to the Mobile Subscriber Center MSC/VLR
- A call establishment attempt is made from the mobile subscriber/equipment MSA via the Mobile Subscriber Center MSC/VLR. The call establishment attempt corresponds in the MSC/VLR to a specified Interception Related Information activity
- A Network Induced Location Request NI-LR is initiated by the Mobile Subscriber Center MSC/VLR, just as if CM Service Request for emergency Services had been received
- The MSC sends a Location Request to the Radio Access Network
- The MSC receives a Location Response from the Radio Access Network including location estimate of the monitored mobile subscriber/equipment MSA
- Upon receiving the location estimate, the Mobile Subscriber Center MSC/VLR includes the estimate into the Interception Related Information from the received IRI activity, i.e. the call establishment attempt, and forwards IRI + location estimate via the interface X2 to the second Delivery Function DF2. The IRI + location estimate is forwarded from DF2 to the to the Law Enforcement Agency LEA.

In the first embodiment there's no possibility to explicitly require getting location information in the IRI, and/or specifying whether the location estimate is needed in the IRI or not. In the first embodiment all the IRI are considered to be specified to include location estimate. In addition to the functionality described in the first embodiment, i.e. the triggering of NI-LR by any Lawful Interception activity, this level of activity foresees the possibility for the LEA/ADMF to explicitly require the IAP to add the location estimate, if available, in specified IRI. This is obtained by enhancing the X1 interface in a second embodiment. When the interception is activated, the activation message will carry also an indication whether the accurate location estimate (i.e. latitude, longitude and not only Cell Global Identity/Service Area Identity) has to be included in IRI or not. A method according to the second embodiment of the invention comprises the following steps:
- The Law Enforcement Agency LEA sends a request to the Administration Function ADMF to activate interception of the mobile subscriber/equipment MSA, i.e. to monitor MSA
- The LEA requests location estimate to be included in the IRI. A specification of at least one Interception Related Information activity that will initiate start of the Network Induced Location Request (NI-LR) procedure is hereby sent from the Law Enforcement Agency (LEA) to the ADMF. In this example, the two activities "call establishment" and "handover" have been selected
- The ADMF forwards a target identity of the mobile subscriber/equipment MSA, to the Intercept Access Point IAP, i.e. to the Mobile Subscriber Center MSC/VLR. Request to provide location estimate, i.e. trigger NI-LR, for the two specified activities is also forwarded from the ADMF to MSC/VLR
- A call establishment attempt is made from the mobile subscriber/equipment MSA to the Mobile Subscriber Center MSC/VLR. The call establishment attempt corresponds to one of the specified Interception Related Information activities
- The Mobile Subscriber Center MSC/VLR initiates a Network Induced Location Request NI-LR
- The MSC sends a Location Request to the Radio Access Network in which MSA is located
- The MSC receives a Location Response from the Radio Access Network including location estimate of the monitored mobile subscriber/equipment MSA
- Upon receiving the location estimate, the Mobile Subscriber Center MSC/VLR includes the estimate into the Interception Related Information from the received IRI activity and forwards IRI + location estimate via the interface X2 to the second Delivery Function DF2. The IRI + location estimate is forwarded from DF2 to the to the Law Enforcement Agency LEA.

In case positioning procedures requires some time, depending on the positioning method used by the Radio Access Network, and if the sending of IRI cannot be delayed, the location estimate could be sent to the Law Enforcement Agency at a later stage, without delaying the sending of IRI. A solution to this is obtained by sending the IRI separated from the location estimate - thus avoiding any delay - and, as soon as the location estimate is available, send it in a Mobile Application Part MAP Subscriber Location report message to the Gateway Mobile Location Center GMLC indicated by the ADMF, as already done in case of NI-LR due to Emergency call. The following two steps will hereby replace the last method step in the above-described two embodiments:
- Upon receiving the location estimate, the Mobile Subscriber Center MSC/VLR forwards IRI via the interface X2 to the second Delivery Function DF2. The IRI is forwarded from DF2 to the to the Law Enforcement Agency LEA
- The MSC/VLR sends the received location estimate in a Mobile Application Part MAP Subscriber Location report message to the Gateway Mobile Location Center GMLC indicated by the ADMF.

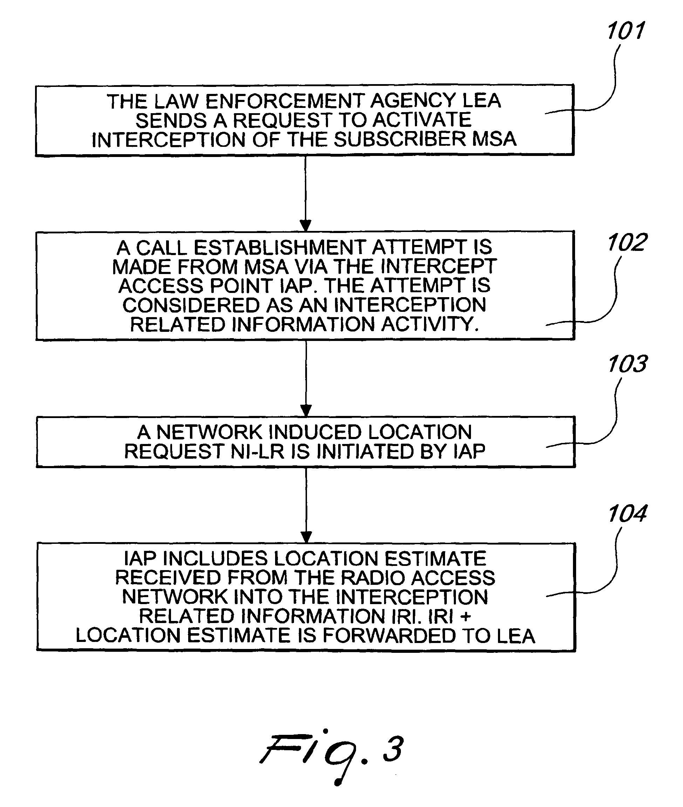

Figure 3 discloses a flowchart in which some more important steps are shown. The flowchart is to be read together with the earlier shown figures. The flowchart comprises the following steps:
- The Law Enforcement Agency LEA sends a request to activate interception of the mobile subscriber/equipment MSA, to the Intercept Access Point IAP. A block 101 discloses this step in figure 3
- A call establishment attempt is made from the mobile subscriber/equipment MSA via the Mobile Subscriber Center MSC/VLR. The attempt is considered in the MSC/VLR as an Interception Related Information activity. A block 102 discloses this step in figure 3
- A Network Induced Location Request NI-LR is initiated by the Mobile Subscriber Center MSC/VLR, just as if CM Service Request for emergency Services had been received. A block 103 discloses this step in figure 3
- Upon receiving location estimate from the Radio Access network, the Mobile Subscriber Center MSC/VLR includes the estimate into the Interception Related Information from the received IRI activity. The IRI + location estimate is forwarded to the to the Law Enforcement Agency LEA. A block 104 discloses this step in figure 3.

Different variations are possible within the scope of the invention. As an alternative to the relative order of the above method steps different variations can be conceived.

The invention is applicable in both circuit switched (connection oriented) and packet switched (connection less) networks. The disclosed GSM network/access in the described embodiments is just an example of a network/access that can be used. Other examples would be a 3G WCDMA network, IP Multimedia Subsystem and Wireless LAN access.

The invention is of course not limited to the above described and in the drawings shown embodiments but can be modified within the scope of the enclosed claims.

## Claims

1. Method in a mobile telecommunication system to generate interception related information, IRI, including geographical location of a monitored mobile subscriber/equipment, which system is configured to provide at an Intercept configuration unit (ICU), information collected from an Intercept Access Point, IAP; MSC, and which system is configured to proceed with a Network Induced Location Request (NI-LR) procedure in case an emergency call is performed, which method comprises the following steps:
- receiving at the Intercept Access Point, IAP; MSC, from the Intercept configuration unit, ICU, a request to monitor the mobile subscriber/equipment, MSA;
- detection in the Intercept Access Point, IAP; MSC, of a specified Interception Related Information activity, IRI, involving the monitored subscriber/equipment, MSA, **characterized in that**:
- the Intercept Access Point, IAP; MSC, initiates start of the Network Induced Location Request, NI-LR, procedure, as if an emergency call is performed.

2. Method in a mobile telecommunication system according to claim 1 whereby the Intercept configuration unit, ICU, comprises a Law Enforcement Agency, LEA, attached to an Administration Function, ADMF, which method comprises the following further steps:
- sending from the Law Enforcement Agency, LEA, to the Administration Function, ADMF, the request to monitor the mobile subscriber/equipment, MSA;
- forwarding the request from the Administration Function to the Intercept Access Point, IAP; MSC.

3. Method in a mobile telecommunication system to generate interception related information according to claim 2, whereby Location estimate information is delivered from the Intercept Access Point, MSC, to the Law Enforcement Agency, LEA.

4. Method in a mobile telecommunication system to generate interception related information according to claim 3, whereby the location estimate information is added to the Interception Related Information related to the detected activity before the delivering from the Intercept Access Point, IAP; MSC, to the Law Enforcement Agency, LEA.

5. Method in a mobile telecommunication system to generate interception related information according to claim 1 or 2, which system comprises a Gateway Mobile Location Center, GMLC, associated to the Intercept Access Point, IAP; MSC, which method comprises the following further steps:
- delivering of the location estimate from the Intercept Access Point, IAP; MSC, to the Gateway Mobile Location Center, GMLC.

6. Method in a mobile telecommunication system to generate interception related information according to any of claims 1-5, which method comprises the following further step:
- sending from the Intercept configuration unit , ICU, to the Intercept Access Point , IAP; MSC, a specification of at least one Interception Related Information activity that will initiate start of the Network Induced Location Request, NI-LR, procedure.

7. Method in a mobile telecommunication system according to any of claims 1-6, which telecommunication system is a GSM or an UMTS network.

8. Arrangement in a mobile telecommunication system to generate interception related information , IRI, including geographical location of a monitored mobile subscriber/equipment, which system is configured to provide at an Intercept configuration unit , ICU, information collected from an Intercept Access Point, IAP; MSC, and which system is configured to proceed with a Network Induced Location Request , NI-LR, procedure in case an emergency call is performed, which arrangement comprises:
- means for receiving at the Intercept Access Point, IAP; MSC_{,} from the Intercept configuration unit, ICU, a request to monitor the mobile subscriber/equipment, MSA;
- means for detecting in the Intercept Access Point IAP; MSC, of a specified Interception Related Information activity, IRI involving the monitored subscriber/equipment, MSA, **characterized in**:
- means in the Intercept Access Point, IAP; MSC for initiating start of the Network Induced Location Request, NI-LR, procedure, as if an emergency call is performed.

9. Arrangement in a mobile telecommunication system according to claim 8 which Intercept configuration unit, ICU, comprises a Law Enforcement Agency, LEA, attached to an Administration Function , ADMF, and which arrangement further comprises:
- means for sending from the Law Enforcement Agency, LEA, to the Administration Function, ADMF, the request to monitor the mobile subscriber/equipment, MSA;
- means for forwarding the request from the Administration Function to the Intercept Access Point, IAP; MSC.

10. Arrangement in a mobile telecommunication system to generate interception related information according to claim 9, which comprises means to deliver Location estimate information from the Intercept Access Point, MSC, to the Law Enforcement Agency, LEA.

11. Arrangement in a mobile telecommunication system to generate interception related information according to claim 10, which comprises means to add location estimate information to the Interception Related Information related to the detected activity before the delivering from the Intercept Access Point, IAP; MSC, to the Law Enforcement Agency, LEA.

12. Arrangement in a mobile telecommunication system to generate interception related information according to claim 8 or 9, which system comprises a Gateway Mobile Location Center, GMLC, associated to the Intercept Access Point, IAP; MSC, which arrangement further comprises:
- means for delivering the location estimate from the Intercept Access Point, IAP; MSC, to the Gateway Mobile Location Center, GMLC.

13. Arrangement in a mobile telecommunication system to generate interception related information according to any of claims 8-12, which arrangement further comprises:
- means for sending from the Intercept configuration unit, ICU, to the Intercept Access Point, IAP; MSC, a specification of at least one Interception Related Information activity that will initiate start of the Network Induced Location Request, NI-LR, procedure.

## Patentansprüche

1. Verfahren in einem Mobiltelekommunikationssystem zum Erzeugen von Telekommunikationsüberwachungbetreffender Information, IRI, einschließlich geographischer Position eines überwachten Teilnehmers/Geräts, welches System dazu konfiguriert ist, an einer Telekommunikationsüberwachungs-Konfigurationseinheit, ICU, Information bereitzustellen, die von einem Telekommunikationsüberwachungs-Zugangspunkt, IAP; MSC, gesammelt wird, und welches System dazu konfiguriert ist, eine NI-LR(netzinduzierte Positionsanforderung)-Prozedur durchzuführen, falls ein Notruf ausgeführt wird, welches Verfahren die folgenden Schritte umfasst:
- am Telekommunikationsüberwachungs-Zugangspunkt, IAP; MSC, von der Telekommunikationsüberwachungs-Konfigurationseinheit, ICU, eine Anforderung empfangen, den Mobilteilnehmer/Gerät, MSA, zu überwachen;
- im Telekommunikationsüberwachungs-Zugangspunkt, IAP; MSC, eine spezifizierte IRI(Telekommunikationsüberwachung betreffende Information)-Aktivität detektieren, an der der überwachte Teilnehmer/Gerät, MSA, beteiligt ist,
**dadurch gekennzeichnet, dass**:
- der Telekommunikationsüberwachungs-Zugangspunkt, IAP; MSC, den Start der NI-LR(netzinduzierte Positionsanforderung)-Prozedur initiiert, als ob ein Notruf ausgeführt würde.

2. Verfahren in einem Mobiltelekommunikationssystem nach Anspruch 1, wodurch die Telekommunikationsüberwachungs-Konfigurationseinheit, ICU, eine einer Verwaltungsfunktion, ADMF, angeschlossene Vollstreckungsbehörde, LEA, umfasst, welches Verfahren die folgenden weiteren Schritte umfasst:
- von der Vollstreckungsbehörde, LEA, an die Verwaltungsfunktion, ADMF, die Anforderung senden, den Mobilteilnehmer/Gerät, MSA, zu überwachen;
- Weiterleiten der Anforderung von der Verwaltungsfunktion an den Telekommunikationsüberwachungs-Zugangspunkt, IAP; MSC.

3. Verfahren in einem Mobiltelekommunikationssystem zum Erzeugen von Telekommunikationsüberwachung betreffender Information nach Anspruch 2, wodurch Positionsschätzungsinformation vom Telekommunikationsüberwachungs-Zugangspunkt, MSC, an die Vollstreckungsbehörde, LEA, gesendet wird.

4. Verfahren in einem Mobiltelekommunikationssystem zum Erzeugen von Telekommunikationsüberwachung betreffender Information nach Anspruch 3, wodurch die Positionsschätzungsinformation der die Telekommunikationsüberwachung betreffenden Information hinzugefügt wird, die die detektierte Aktivität betrifft, bevor vom Telekommunikationsüberwachungs-Zugangspunkt, IAP; MSC, an die Vollstreckungsbehörde, LEA, gesendet wird.

5. Verfahren in einem Mobiltelekommunikationssystem zum Erzeugen von Telekommunikationsüberwachung betreffender Information nach Anspruch 1 oder 2, welches System ein Gateway-Mobilpositionszentrum, GMLC, umfasst, das mit dem Telekommunikationsüberwachungs-Zugangspunkt, IAP; MSC, assoziiert ist, welches Verfahren die folgenden weiteren Schritte umfasst:
- Senden der Positionsschätzung vom Telekommunikationsüberwachungs-Zugangspunkt, IAP; MSC, an das Gateway-Mobilpositionszentrum, GMLC.

6. Verfahren in einem Mobiltelekommunikationssystem zum Erzeugen von Telekommunikationsüberwachung betreffender Information nacheinem der Ansprüche 1-5, welches Verfahren den folgenden weiteren Schritt umfasst;
- von der Telekommunikationsüberwachungs-Konfigurationseinheit, ICU, an den Telekommunikationsüberwachungs-Zugangspunkt, IAP; MSC, eine Spezifikation von mindestens einer IRI(Telekommunikationsüberwachung betreffende Information)-Aktivität senden, die den Start der NI-LR(netzinduzierte Positionsanforderung)-Prozedur initiieren wird.

7. Verfahren in einem Mobiltelekommunikationssystem nach einem der Ansprüche 1-6, welches Kommunikationssystem ein GSM- oder ein UMTS-Netz ist.

8. Anordnung in einem Mobiltelekommunikationssystem zum Erzeugen von Telekommunikationsüberwachung betreffender Information, IRI, einschließlich geographischer Position eines überwachten Teilnehmers/Geräts, welches System dazu konfiguriert ist, an einer Telekommunikationsüberwachungs-Konfigurationseinheit, ICU, Information bereitzustellen, die von einem Telekommunikationsüberwachungs-Zugangspunkt, IAP; MSC, gesammelt wird, und welches System dazu konfiguriert ist, eine NI-LR(netzinduzierte Positionsanforderung)-Prozedur durchzuführen, falls ein Notruf ausgeführt wird, welche Anordnung Folgendes umfasst:
- ein Mittel, um am Telekommunikationsüberwachungs-Zugangspunkt, IAP; MSC, von der Telekommunikationsüberwachungs-Konfigurationseinheit, ICU, eine Anforderung zu empfangen, den Mobilteilnehmer/Gerät, MSA, zu überwachen;
- ein Mittel, um im Telekommunikationsüberwachungs-Zugangspunkt, IAP; MSC, eine spezifizierte IRI(Telekommunikationsüberwachung betreffende Information)-Aktivität zu detektieren, an der der überwachte Teilnehmer/Gerät, MSA, beteiligt ist,
**gekennzeichnet durch**:
- ein Mittel im Telekommunikationsüberwachungs-Zugangspunkt, IAP; MSC, um den Start der NI-LR(netzinduzierte Positionsanforderung)-Prozedur zu initiieren, als ob ein Notruf ausgeführt würde.

9. Anordnung in einem Mobiltelekommunikationssystem nach Anspruch 8, welche Telekommunikationsüberwachungs-Konfigurationseinheit, ICU, eine einer Verwaltungsfunktion, ADMF, angeschlossene Vollstreckungsbehörde, LEA, umfasst, und welches Anordnung außerdem umfasst:
- ein Mittel, um von der Vollstreckungsbehörde, LEA, an die Verwaltungsfunktion, ADMF, die Anforderung zu senden, den Mobilteilnehmer/Gerät, MSA, zu überwachen;
- ein Mittel, um die Anforderung von der Verwaltungsfunktion an den Telekommunikationsüberwachungs-Zugangspunkt, IAP; MSC, weiterzuleiten.

10. Anordnung in einem Mobiltelekommunikationssystem zum Erzeugen von Telekommunikationsüberwachung betreffender Information nach Anspruch 9, die ein Mittel umfasst, um Positionsschätzungsinformation vom Telekommunikationsüberwachungs-Zugangspunkt, MSC, an die Vollstreckungsbehörde, LEA, zu senden.

11. Anordnung in einem Mobiltelekommunikationssystem zum Erzeugen von Telekommunikationsüberwachung betreffender Information nach Anspruch 10, die ein Mittel umfasst, um Positionsschätzungsinformation der Telekommunikationsüberwachung betreffenden Information hinzuzufügen, die die detektierte Aktivität betrifft, bevor vom Telekommunikationsüberwachungs-Zugangspunkt, IAP; MSC, an die Vollstreckungsbehörde, LEA, gesendet wird.

12. Anordnung in einem Mobiltelekommunikationssystem zum Erzeugen von Telekommunikationsüberwachung betreffender Information nach Anspruch 8 oder 9, welches System ein Gateway-Mobilpositionszentrum, GMLC, umfasst, das mit dem Telekommunikationsüberwachungs-Zugangspunkt, IAP; MSC assoziiert ist, welche Anordnung außerdem umfasst:
- ein Mittel zum Senden der Positionsschätzung vom Telekommunikationsüberwachungs-Zugangspunkt, IAP; MSC, an das Gateway-Mobilpositionszentrum, GMLC.

13. Anordnung in einem Mobiltelekommunikationssystem zum Erzeugen von Telekommunikationsüberwachung betreffender Information nach einem der Ansprüche 8-12, welche Anordnung außerdem umfasst;
- ein Mittel, um von der Telekommunikationsüberwachungs-Konfigurationseinheit, ICU, an den Telekommunikationsüberwachungs-Zugangspunkt, IAP; MSC, eine Spezifikation von mindestens einer IRI(Telekommunikationsüberwachung betreffende Information)-Aktivität zu senden, die den Start der NI-LR(netzinduzierte Positionsanforderung)-Prozedur initiieren wird.

## Revendications

1. Procédé mis en oeuvre dans un système de télécommunication mobile destiné à générer des informations relatives à l'interception, IRI, incluant l'emplacement géographique d'un équipement / abonné mobile surveillé, lequel système est configuré de manière à fournir, au niveau d'une unité de configuration d'interception (ICU), des informations collectées à partir d'un point d'accès d'interception, IAP ; MSC, et lequel système est configuré de manière à mettre en oeuvre une procédure de demande de localisation induite par le réseau (NI-LR) dans le cas où un appel d'urgence est exécuté, lequel procédé comprend les étapes ci-dessous consistant à :
- recevoir, au niveau du point d'accès d'interception, IAP ; MSC, à partir de l'unité de configuration d'interception, ICU, une demande visant à surveiller l'équipement / abonné mobile, MSA ;
- détecter, dans le point d'accès d'interception, IAP ; MSC, une activité spécifiée d'informations relatives à l'interception, IRI, impliquant l'équipement / abonné surveillé, MSA ;
**caractérisé en ce que** :
- le point d'accès d'interception, IAP ; MSC, initie le début de la procédure de demande de localisation induite par le réseau, NI-LR, comme dans le cas où un appel d'urgence est exécuté.

2. Procédé mis en oeuvre dans un système de télécommunication mobile selon la revendication 1, moyennant quoi l'unité de configuration d'interception, ICU, comporte un service chargé de l'application des lois, LEA, rattaché à une fonction d'administration, ADMF, lequel procédé comprend les étapes supplémentaires ci-dessous consistant à :
- envoyer, du service chargé de l'application des lois, LEA, à la fonction d'administration, ADMF, la demande visant à surveiller l'équipement / abonné mobile, MSA ;
- acheminer la demande, de la fonction d'administration au point d'accès d'interception, IAP ; MSC.

3. Procédé mis en oeuvre dans un système de télécommunication mobile destiné à générer des informations relatives à l'interception selon la revendication 2, moyennant quoi des informations d'estimation de localisation sont délivrées, du point d'accès d'interception, MSC, au service chargé de l'application des lois, LEA.

4. Procédé mis en oeuvre dans un système de télécommunication mobile destiné à générer des informations relatives à l'interception selon la revendication 3, moyennant quoi les informations d'estimation de localisation sont ajoutées aux informations relatives à l'interception connexes à l'activité détectée, avant la fourniture du point d'accès d'interception, IAP ; MSC, au service chargé de l'application des lois, LEA.

5. Procédé mis en oeuvre dans un système de télécommunication mobile destiné à générer des informations relatives à l'interception selon la revendication 1 ou 2, lequel système comporte un centre de localisation des mobiles de transit, GMLC, associé au point d'accès d'interception, IAP ; MSC, lequel procédé comprend les étapes supplémentaires ci-dessous consistant à :
- délivrer l'estimation de localisation, du point d'accès d'interception, IAP ; MSC, au centre de localisation des mobiles de transit, GMLC.

6. Procédé mis en oeuvre dans un système de télécommunication mobile destiné à générer des informations relatives à l'interception selon l'une quelconque des revendications 1 à 5, lequel procédé comprend l'étape supplémentaire ci-dessous consistant à :
- envoyer, de l'unité de configuration d'interception, ICU, au point d'accès d'interception, IAP, MSC, une spécification d'au moins une activité d'informations relatives à l'interception qui initiera le début de la procédure de demande de localisation induite par le réseau, NI-LR.

7. Procédé mis en oeuvre dans un système de télécommunication mobile selon l'une quelconque des revendications 1 à 6, lequel système de télécommunication est un système GSM ou un réseau UMTS.

8. Agencement, dans un système de télécommunication mobile, destiné à générer des informations relatives à l'interception, IRI, incluant l'emplacement géographique d'un équipement / abonné mobile surveillé, lequel système est configuré de manière à fournir, au niveau d'une unité de configuration d'interception, ICU, des informations collectées à partir d'un point d'accès d'interception, IAP ; MSC, et lequel système est configuré de manière à mettre en oeuvre une procédure de demande de localisation induite par le réseau, NI-LR, dans le cas où un appel d'urgence est exécuté, lequel agencement comprend :
- un moyen pour recevoir, au niveau du point d'accès d'interception, IAP ; MSC, à partir de l'unité de configuration d'interception, ICU, une demande visant à surveiller l'équipement / abonné mobile, MSA ;
- un moyen pour détecter, dans le point d'accès d'interception, IAP ; MSC, une activité spécifiée d'informations relatives à l'interception, IRI, impliquant l'équipement / abonné surveillé, MSA ;
**caractérisé par** :
- un moyen, dans le point d'accès d'interception, IAP ; MSC, pour initier le début de la procédure de demande de localisation induite par le réseau, NI-LR, comme dans le cas où un appel d'urgence est exécuté.

9. Agencement dans un système de télécommunication mobile selon la revendication 8, dans lequel l'unité de configuration d'interception, ICU, comporte un service chargé de l'application des lois, LEA, rattaché à une fonction d'administration, ADMF, et dans lequel l'agencement comporte en outre :
- un moyen pour envoyer, du service chargé de l'application des lois, LEA, à la fonction d'administration, ADMF, la demande visant à surveiller l'équipement / abonné mobile, MSA ; et
- un moyen pour acheminer la demande, de la fonction d'administration au point d'accès d'interception, IAP ; MSC.

10. Agencement dans un système de télécommunication mobile destiné à générer des informations relatives à l'interception selon la revendication 9, lequel comprend un moyen pour délivrer des informations d'estimation de localisation, du point d'accès d'interception, MSC, au service chargé de l'application des lois, LEA.

11. Agencement dans un système de télécommunication mobile destiné à générer des informations relatives à l'interception selon la revendication 10, lequel comprend un moyen pour ajouter des informations d'estimation de localisation aux informations relatives à l'interception connexes à l'activité détectée, avant la fourniture du point d'accès d'interception, IAP ; MSC, au service chargé de l'application des lois, LEA.

12. Agencement dans un système de télécommunication mobile destiné à générer des informations relatives à l'interception selon la revendication 8 ou 9, lequel système comprend un centre de localisation des mobiles de transit, GMLC, associé au point d'accès d'interception, IAP ; MSC, lequel agencement comprend en outre :
- un moyen pour délivrer l'estimation de localisation, du point d'accès d'interception, IAP ; MSC, au centre de localisation des mobiles de transit, GMLC.

13. Agencement dans un système de télécommunication mobile destiné à générer des informations relatives à l'interception selon l'une quelconque des revendications 8 à 12, lequel agencement comprend en outre :
- un moyen pour envoyer, de l'unité de configuration d'interception, ICU, au point d'accès d'interception, IAP ; MSC, une spécification d'au moins une activité d'informations relatives à l'interception qui initiera le début de la procédure de demande de localisation induite par le réseau, NI-LR.
